# EUROPEAN PATENT APPLICATION

(11) **EP 4 692 207 A1**
(43) Date of publication of application: **11.02.2026**
(21) Application number: 24780105.3
(22) Date of filing: 25.03.2024
(51) Int. Cl.: C08L 23/04, C08F 10/02, C08K 3/04, C08K 7/02, C08K 7/06

(54) **ETHYLENE RESIN COMPOSITION AND MOLDED BODY**

(30) Priority: 31.03.2023 JP 2023058490
(71) Applicant: Mitsui Chemicals, Inc., Tokyo 104-0028 (JP)
(72) Inventor: KOMATSU, Chihiro, Sodegaura-shi, Chiba 299-0265 (JP); ONO, Kenta, Sodegaura-shi, Chiba 299-0265 (JP); FUJISAWA, Mitsuru, Sodegaura-shi, Chiba 299-0265 (JP); HOTANI, Yohei, Sodegaura-shi, Chiba 299-0265 (JP)
(74) Representative: J A Kemp LLP
(86) International application number: PCT/JP2024/011552
(87) International publication number: WO 2024/203987

(57) **Abstract**

One embodiment of the present invention relates to an ethylene resin composition or a molded body using the composition, and the ethylene resin composition contains 100 parts by mass of an ethylene polymer composition (A) and 1 to 30 parts by mass of a carbon filler (B), in which the ratio of the shear viscosity η₁₃₃₀ measured at a temperature of 250°C and a shear rate of 1330 s⁻¹ to the shear viscosity η_{13.3} measured at a temperature of 250°C and a shear rate of 13.3 s⁻¹ (η₁₃₃₀/η_{13.3}) is less than 0.027.

## Description

### Technical Field

One embodiment of the present invention relates to an ethylene resin composition or a molded body using the same.

### Background Art

Ethylene polymers with an extremely high molecular weight, so-called ultrahigh molecular weight ethylene polymers, have excellent impact resistance, abrasion resistance, chemical resistance, and strength compared to general-purpose ethylene polymers, and have excellent characteristics as engineering plastics.

Such ultrahigh molecular weight ethylene polymers have been known to be obtained by a known catalyst such as so-called a Ziegler catalyst consisting of a halogen-containing transition metal compound and an organometallic compound, and a magnesium compound-supported catalyst.

Due to their high molecular weight, melt molding of ultrahigh molecular weight ethylene polymer, which is a molding method for general resins, is considered to be difficult. A ram extrusion method for producing a molded body of an ultrahigh molecular weight ethylene polymer has already been commonly used (Patent Literature 1).

Moreover, as a method for improving sliding properties and mechanical properties of an ethylene polymer, dispersing cellulose fibers in an ethylene polymer has been proposed (Patent Literature 2).

On the other hand, an ultrahigh molecular weight ethylene polymer composition with improved electrical conductivity may be required, depending on its application. As a composition containing an ultrahigh molecular weight ethylene polymer and having improved electrical conductivity, a composition has been proposed, which contains an ethylene polymer and a carbon-based filler and has a melt flow rate (MFR, measured at 230°C and under a load of 10 kg) in the range of 0.1 to 20 g/10 min (Patent Literature 3).

### Citation List

### Patent Literature

[Patent Literature 1] JP55-28896A
[Patent Literature 2] JP2019-35005A
[Patent Literature 3] WO2022/038941

### Summary of Invention

### Technical Problem

The composition of Patent Literature 3 has excellent electrical conductivity, and furthermore has excellent feature of being moldable by injection molding despite containing an ultrahigh molecular weight ethylene polymer, however, depending on the application, there may be cases where improvement in abrasion resistance is required.

One embodiment of the present invention provides a composition that is excellent in both electrical conductivity and injection moldability, and is further excellent in abrasion resistance as well.

### Solution to Problem

As a result of research, the present inventors have found that the above problems can be solved by the following configuration examples. Configuration examples of the present invention are as shown in [1] to [8] below.

The phrase "A to B" indicating a numerical range as used herein means A or more and B or less.

[1] An ethylene resin composition (X), comprising 100 parts by mass of an ethylene polymer composition (A) and 1 to 30 parts by mass of a carbon filler (B),
   wherein a ratio of a shear viscosity η₁₃₃₀ measured at a temperature of 250°C and a shear rate of 1330 s⁻¹ to a shear viscosity η_{13.3} measured at a temperature of 250°C and a shear rate of 13.3 s⁻¹ (η₁₃₃₀/η_{13.3}) is less than 0.027.
[2] The ethylene resin composition (X) according to [1], wherein the carbon filler (B) is a carbon nanotube.
[3] The ethylene resin composition (X) according to [1] or [2],
   wherein the ethylene polymer composition (A) contains 20 to 60 parts by mass of an ultrahigh molecular weight ethylene polymer (a1) having an intrinsic viscosity [η] of 10 to 40 dl/g measured in decalin at 135°C and
   40 to 80 parts by mass of a low to high molecular weight ethylene polymer (a2) having an intrinsic viscosity [η] of 0.1 to 9 dl/g measured in decalin at 135°C (provided that the total amount of the ultrahigh molecular weight ethylene polymer (a1) and the low to high molecular weight ethylene polymer (a2) is 100 parts by mass).
[4] The ethylene resin composition (X) according to any one of [1] to [3], having a melt flow rate (MFR) of 0.1 g/10 min or less at 190°C under a load of 10 kg.
[5] The ethylene resin composition (X) according to any one of [1] to [4], wherein the ethylene polymer composition (A) has an intrinsic viscosity [η] of 3.0 to 15 dl/g measured in decalin at 135°C and a density of 930 to 980 kg/m³.
[6] A molded body, comprising the ethylene resin composition (X) according to any one of [1] to [5].
[7] The molded body according to [6], being an injection molded body.
[8] The molded body according to [6] or [7], being a covering material or a sliding material.

### Advantageous Effects of Invention

According to one embodiment of the present invention, a composition that is excellent in both electrical conductivity and injection moldability, and is further excellent in abrasion resistance as well, is provided.

### Description of Embodiments

### <<Ethylene resin composition (X)>>

The ethylene resin composition (X) (hereinafter also referred to as "resin composition (X)") contains 100 parts by mass of an ethylene polymer composition (A) and 1 to 30 parts by mass of a carbon filler (B).

### <Ethylene polymer composition (A)>

The ethylene polymer composition (A) preferably contains a specific ultrahigh molecular weight ethylene polymer (a1) and a specific low to high molecular weight ethylene polymer (a2) (hereinafter also referred to as "ethylene polymer (a2)").

### [Ultrahigh molecular weight ethylene polymer (a1)]

The ultrahigh molecular weight ethylene polymer (a1) preferably satisfies the following requirement (a1-a).

### [Requirement (a1-a)]

The ultrahigh molecular weight ethylene polymer (a1) has an intrinsic viscosity [n] measured in decalin at 135°C of preferably 10 to 40 dl/g, more preferably 15 to 35 dl/g, and still more preferably 20 to 35 dl/g.

Details such as measurement conditions are as described in the section of Examples described later.

When the intrinsic viscosity [η] of the ultrahigh molecular weight ethylene polymer (a1), measured in decalin at 135°C is 10 dl/g or more, the ethylene polymer composition (A) is likely to have favorable abrasion resistance. As a result, the resin composition (X) containing the ethylene polymer composition (A) and a molded body to be obtained from the resin composition (X) are likely to have favorable abrasion resistance, self-lubrication, impact strength, and chemical resistance. Also, when the intrinsic viscosity [η] of the ultrahigh molecular weight ethylene polymer (a1), measured in decalin at 135°C is 40 dl/g or less, the ethylene polymer composition (A) and the resin composition (X), compounded with the ultrahigh molecular weight ethylene polymer (a1) are likely to have high melt flowability. In other words, within the aforementioned range of the intrinsic viscosity [η] of the ultrahigh molecular weight ethylene polymer (a1), the ethylene polymer composition (A) and the resin composition (X), containing the ultrahigh molecular weight ethylene polymer (a1) can achieve both abrasion resistance and moldability.

The ultrahigh molecular weight ethylene polymer (a1) is a homopolymer of ethylene or a copolymer of ethylene and an α-olefin such as propylene, 1-butene, 1-pentene, 1-hexene, 1-octene, 1-decene, 1-dodecene, 4-methyl-1-pentene, or 3-methyl-1-pentene. The ultrahigh molecular weight ethylene polymer (a1) is preferably a homopolymer of ethylene or a copolymer of ethylene and the above α-olefin, which is a copolymer composed of ethylene as a main ingredient, and more preferably a homopolymer of ethylene. Herein, the main ingredient means a component having the highest content (mol%) among constituent units included in the polymer.

### [Low to high molecular weight ethylene polymer (a2)]

The ethylene polymer (a2) preferably satisfies one or more of the following requirements (a2-a) and (a2-b).

### [Requirement (a2-a)]

The intrinsic viscosity [η] of the ethylene polymer (a2), measured in decalin at 135°C is preferably 0.1 to 9.0 dl/g, more preferably 0.1 to 5.0 dl/g, still more preferably 0.5 to 3.0 dl/g, and particularly preferably 1.0 to 2.5 dl/g.

Details such as measurement conditions are as described in the section of Examples described later.

When the intrinsic viscosity [η] of the ethylene polymer (a2), measured in decalin at 135°C is 0.1 dl/g or more, the ethylene polymer composition (A) is likely to have favorable abrasion resistance. As a result, the resin composition (X) containing the ethylene polymer composition (A) and a molded body to be obtained from the resin composition (X) have a likelihood of favorable abrasion resistance. Also, when the intrinsic viscosity [η] of the ethylene polymer (a2), measured in decalin at 135°C is 9.0 dl/g or less, the ethylene polymer composition (A) and the resin composition (X) containing the ethylene polymer composition (A) are likely to have high melt flowability. Namely, the intrinsic viscosity [η] of the ethylene polymer (a2), measured in decalin at 135°C of 0.1 to 9.0 dl/g, facilitates providing the ethylene polymer composition (A) and the resin composition (X), which are excellent in both abrasion resistance and moldability. Also, when the intrinsic viscosity [η] of the ethylene polymer (a2), measured in decalin at 135°C falls within the above-described range, the carbon filler (B) used for preparing the resin composition (X) is likely to be dispersed, making it possible to contain, in the resin composition (X), the carbon filler (B) in an amount sufficient to impart desired electrical conductivity to the resin composition (X).

### [Requirement (a2-b)]

The density of the ethylene polymer (a2) is preferably 920 to 985 kg/m³, more preferably 940 to 985 kg/m³, still more preferably 950 to 980 kg/m³, even still more preferably 950 to 975 kg/m³, and yet even more preferably 960 to 975 kg/m³.

Details such as measurement conditions are as described in the section of Examples described later.

When the density of the ethylene polymer (a2) is 920 kg/m³ or more, the degree of crystallinity of the ethylene polymer (a2) tends to increase to the extent that the surface sliding properties of the ethylene polymer (a2) is not impaired. Therefore, the ethylene polymer composition (A) to be obtained and the resin composition (X) containing the ethylene polymer composition (A) tend to have excellent abrasion resistance. Also, since the density of polyethylene is usually 985 kg/m³ or less, polyethylene having a density of 985 kg/m³ or less is used as the ethylene polymer (a2).

The ethylene polymer (a2) is a homopolymer of ethylene or a copolymer of ethylene and an α-olefin. Preferably, the ethylene polymer (a2) is a homopolymer of ethylene.

Examples of the α-olefin constituting the copolymer includes linear or branched α-olefins having 3 to 20 carbon atoms, specifically propylene, 1-butene, 1-pentene, 3-methyl-1-butene, 1-hexene, 4-methyl-1-pentene, 3-methyl-1-pentene, 3,4-dimethyl-1-pentene, 4-methyl-1-hexene, 3-ethyl-1-pentene, 3-ethyl-4-methyl-1-pentene, 3,4-dimethyl-1-hexene, 4-methyl-1-heptene, 3,4-dimethyl-1-heptene, 1-octene, 1-decene, 1-dodecene, 1-tetradecene, 1-hexadecene, 1-octadecene, and 1-eicosene. Of these, propylene and 1-butene are preferably used in view of the relationship with the density range of the ethylene polymer (a2).

The copolymer of ethylene and the α-olefin preferably contains a constituent unit derived from ethylene in an amount of 90 mol% or more and more preferably contains a constituent unit derived from ethylene in an amount of 95 mol% or more. The copolymer of ethylene and the α-olefin preferably contains a constituent unit derived from an α-olefin in an amount of 10 mol% or less and more preferably contains a constituent unit derived from an α-olefin in an amount of 5 mol% or less. When the ethylene polymer (a2) is a copolymer of ethylene and an α-olefin, the greater the amount of a constituent unit derived from ethylene, the more preferable it is. The ethylene polymer (a2) may be wax.

### [Ethylene polymer composition (A)]

The content of the ultrahigh molecular weight ethylene polymer (a1) in the ethylene polymer composition (A) is preferably 20 to 60 parts by mass and more preferably 30 to 50 parts by mass (provided that the total amount of the ultrahigh molecular weight ethylene polymer (a1) and the ethylene polymer (a2) is 100 parts by mass).

The content of the ethylene polymer (a2) in the ethylene polymer composition (A) is preferably 40 to 80 parts by mass and more preferably 50 to 70 parts by mass (with the proviso that the total amount of the ultrahigh molecular weight ethylene polymer (a1) and the ethylene polymer (a2) is 100 parts by mass).

The content of the ultrahigh molecular weight ethylene polymer (a1) in the ethylene polymer composition (A) of 60 parts by mass or less and the content of the ethylene polymer (a2) of 40 parts by mass or more, enables the melt flowability of the ethylene polymer composition (A) to be relatively high. For this reason, the ethylene polymer composition (A) and the resin composition (X) containing the ethylene polymer composition (A) are likely to have favorable moldability. On the other hand, the content of the ultrahigh molecular weight ethylene polymer (a1) of 20 parts by mass or more and the content of the ethylene polymer (a2) of 80 parts by mass or less, result in an ethylene polymer composition (A) and a resin composition (X) containing the ethylene polymer composition (A), which have sufficient abrasion resistance derived from the ultrahigh molecular weight ethylene polymer (a1). The result leads to the ethylene polymer composition (A) and the resin composition (X) containing the ethylene polymer composition (A), which have favorable abrasion resistance, resulting in a tendency of a molded body to be obtained from the resin composition (X) to have excellent abrasion resistance.

The ethylene polymer composition (A) preferably satisfies one or more of the requirements (A-a) and (A-b).

### [Requirement (A-a)]

The intrinsic viscosity [η] of the ethylene polymer composition (A), measured in decalin at 135°C is preferably 3.0 to 15 dl/g, more preferably 3.0 to 10 dl/g, and still more preferably 5.0 to 10 dl/g. Details of a measurement method of the intrinsic viscosity [η] of the ethylene polymer composition (A) are as described in the Examples.

When the intrinsic viscosity [η] in decalin at 135°C of 3.0 dl/g or more, the ethylene polymer composition (A) and the resin composition (X) containing the ethylene polymer composition (A) have favorable abrasion resistance. Accordingly, a molded body to be obtained from the resin composition (X) also tends to have excellent abrasion resistance. On the other hand, when the intrinsic viscosity [η] in decalin at 135°C is 15 dl/g or less, the flowability of the ethylene polymer composition (A) is not reduced, thus the resin composition (X) containing the ethylene polymer composition (A) is likely to have favorable moldability. That is, when the intrinsic viscosity [η] of the ethylene polymer composition (A) in decalin at 135°C falls within the above range, the resin composition (X) also has favorable abrasion resistance with high melt flowability to the extent that the resin composition (X) is easily mold-processed.

### [Requirement (A-b)]

The density of the ethylene polymer composition (A) is preferably 930 to 980 kg/m³ and more preferably 940 to 980 kg/m³. When the density of the ethylene polymer composition (A) is 930 kg/m³ or more, the degree of crystallinity of the ethylene polymer (a2) tends to be so high that the surface sliding properties of the ethylene polymer (a2) is not impaired. As a result, the ethylene polymer composition (A) to be obtained and the resin composition (X) containing the ethylene polymer composition (A) tend to have excellent abrasion resistance. Also, when the density of the ethylene polymer composition (A) is 980 kg/m³ or less, the ethylene polymer composition (A) to be obtained will be excellent in its lightweight and processability. As a result, the resin composition (X) to be obtained also tends to have an excellent lightweight and processability. A method for measuring the density of the ethylene polymer composition (A) is as described in the Examples.

### <Method for producing ethylene polymer composition (A)>

The method for producing the ethylene polymer composition (A) is not particularly limited as long as it is a method in which the ultrahigh molecular weight ethylene polymer (a1) and the ethylene polymer (a2) can be contained in a predetermined ratio, and preferred examples thereof include the following methods (M-1) to (M-5).

Method (M-1): A method for preliminarily producing the ultrahigh molecular weight ethylene polymer (a1) and the ethylene polymer (a2), respectively in the presence of an olefin polymerization catalyst, to produce the ethylene polymer composition (A) by blending the ultrahigh molecular weight ethylene polymer (a1) and the ethylene polymer (a2).

Method (M-2): A method for producing the ethylene polymer composition (A) by a multistage polymerization method including at least two steps of the step of producing the ultrahigh molecular weight ethylene polymer (a1) in the presence of an olefin polymerization catalyst as a first step, and the step of producing the ethylene polymer (a2) as a second step. It is to be noted that the second step is carried out in the presence of the ultrahigh molecular weight ethylene polymer (a1) produced in the first step.

Method (M-3): A method for producing the ethylene polymer composition (A) by a multistage polymerization method including at least two steps of the step of producing the ethylene polymer (a2) in the presence of an olefin polymerization catalyst as a first step, and the step of producing the ultrahigh molecular weight ethylene polymer (a1) as a second step. It is to be noted that the second step is carried out in the presence of the ethylene polymer (a2) produced in the first step.

Method (M-4): A plurality of the ethylene polymer compositions (A) obtained by the method (M-2) or the method (M-3) are blended.

Method (M-5): One or more selected from the ultrahigh molecular weight ethylene polymer (a1) and the ethylene polymer (a2) are blended with the ethylene polymer composition (A) obtained by the method (M-2), (M-3), or (M-4).

The ultrahigh molecular weight ethylene polymer (a1) and the ethylene polymer (a2) can be produced by polymerizing a monomer containing ethylene in the presence of a known olefin polymerization catalyst described in, for example, WO2008/013144 or WO2010/074073 under polymerization conditions such that the ethylene polymer composition (A) has desired physical properties.

Among the methods (M-1) to (M-3), the methods (M-2) and (M-3) using the multistage polymerization method are more preferred, and the method (M-2) in which the ultrahigh molecular weight ethylene polymer (a1) is produced in the first step is still more preferred. The multistage polymerization method allows the ultrahigh molecular weight ethylene polymer (a1) and the ethylene polymer (a2) contained in the ethylene polymer composition (A) to be compatible with each other to improve their dispersibility, making it more likely to achieve both abrasion resistance and moldability, which is preferred. Also, use of the multistage polymerization method improves the compatibility between the ultrahigh molecular weight ethylene polymer (a1) and the ethylene polymer (a2), so that the methods (M-4) and (M-5) are more preferred than the method (M-1).

Furthermore, when comparing the method (M-2) with the method (M-3), in the case of the method (M-2) for producing the ethylene polymer composition (A), for example, a chain transfer agent that causes a chain transfer reaction is added, and a polymerization temperature is raised, in the second step. This makes it more likely to adjust the molecular weight of a polymer to be obtained in the second step (ethylene polymer (a2)) to be lower than the molecular weight of a polymer to be obtained in the first step (ultrahigh molecular weight ethylene polymer (a1)), which is preferred in terms of excellent production efficiency.

In this case, as an olefin such as ethylene to be used in the polymerization, any of the various olefins as described in the sections of the ultrahigh molecular weight ethylene polymer (a1) and ethylene polymer (a2) can be limitlessly used.

The resin composition (X), ethylene polymer composition (A), ultrahigh molecular weight ethylene polymer (a1), and ethylene polymer (a2) (referred to as, for example, the resin compositions, and the polymers, according to one embodiment of the present invention) may use biomass-derived raw materials singly, fossil fuel-derived raw materials singly, or both a biomass-derived raw material and a fossil fuel-derived raw material as raw materials (for example, monomers such as ethylene and an α-olefin).

The biomass-derived raw material is a raw material made from any (renewable) natural raw materials and their residues, derived from such as plant or animal including fungi, yeasts, algae, and bacteria. For example, an example of the raw material includes a raw material containing a ¹⁴C isotope as carbon in the proportion of approximately 1 X 10⁻¹² and having a biomass carbon concentration (unit: pMC) of approximately 100 pMC measured in accordance with ASTM D6866. The biomass-derived raw materials (for example, monomers such as ethylene and an α-olefin) can be obtained, for example, by a method conventionally known in the art.

It is preferable from the viewpoint of reducing an environmental load (mainly greenhouse gas reduction) that, for example, the resin composition and the polymer according to one embodiment of the present invention, contain a constituent unit derived from the biomass-derived raw material.

For example, the resin composition and polymer according to one embodiment of the present invention in spite of being, for example, a resin composition and polymer, containing a biomass-derived raw material, have the same, for example, molecular structure and physical properties except that they contain a ¹⁴C isotope in the proportion of approximately 1 X 10⁻¹² to 1 X 10⁻¹⁴, as those of, for example, a resin composition and polymer composed of a fossil fuel-derived raw material, under the same production conditions such as the polymerization catalyst, polymerization process, polymerization temperature, and kneading method. Therefore, for example, the resin composition and polymer containing a biomass-derived raw material are considered to demonstrate the same performance as, for example, the resin composition and polymer, which are composed of a fossil fuel-derived raw material.

### <Carbon filler (B)>

Examples of the carbon filler (B), which is one of the components constituting the resin composition (X), include a carbon nanotube (CNT), electrically conductive carbon black (CB), and a carbon fiber. The carbon filler (B) is not particularly limited as long as these materials have electrical conductivity, but among these, the carbon nanotube is preferred because it has an excellent effect of reducing the surface electrical resistivity of a molded body.

The carbon nanotube is a cylindrical hollow fibrous substance consisting of carbon, and may be either a multiwalled carbon nanotube or a single-walled carbon nanotube.

The average diameter of the carbon nanotubes is preferably 1 nm or more, more preferably 5 nm or more, still more preferably 7 nm or more, and preferably 20 nm or less. An average length of the carbon nanotubes is preferably 0.5 µm or more, more preferably 0.6 µm, and preferably 50 µm or less, more preferably 30 µm or less, and still more preferably 15 µm or less. The average diameter of 1 nm or more can make it less likely to cause breakage of the carbon nanotube upon kneading, and the average diameter of 20 nm or less tends to enable enhancing electrical conductivity. Also, the average length of 0.5 µm or more can enhance electrical conductivity, and the average length of 50 µm or less inhibits the viscosity upon kneading from increasing, and tends to enable facilitating kneading and molding.

The average diameter and the average length of the carbon nanotubes can be obtained by observing the carbon nanotube with an electron microscope (SEM, TEM) and arithmetically averaging them.

The carbon nanotube can be produced by, for example, an arc discharge method, a chemical vapor deposition method (CVD method), or a laser ablation method. Commercially available carbon nanotubes may be used.

The carbon nanotube tends to exhibit higher electrical conductivity in a relatively small amount compared to, for example, carbon black, but is expensive, so that the use of carbon nanotube in a smaller amount is advantageous from the viewpoint of costs. In the present embodiment, the use of resin composition (X) containing the carbon filler (B) and the ethylene polymer composition (A) enables excellent electrical conductivity to be obtained. In other words, the resin composition (X) tends to possess high electrical conductivity even with a small amount of carbon nanotubes.

Examples of electrically conductive carbon black include furnace black, Ketjen black, channel black, lamp black, thermal black, and acetylene black. Specific examples thereof include HAF-LS, HAF, HAF-HS, FEF, GPF, APF, SRF-LM, SRF-HM, and MT.

The primary particle size of the electrically conductive carbon black is preferably 0.005 µm or more and more preferably 0.01 µm or more, and preferably 1 µm or less and more preferably 0.2 µm or less. The primary particle size is a number-average particle diameter (Heywood diameter: the diameter of a circle having the same area as the projected area of a primary particle) measured by an electron microscope, for example.

As the carbon fiber, various known carbon fibers can be used, and examples thereof include polyacrylonitrile-based, rayon-based, pitch-based, polyvinyl alcohol-based, and regenerated cellulose-based carbon fibers, pitch-based carbon fibers produced from mesophase pitch. In terms of the excellent specific strength of a carbon fiber, it is advantageous in applications where its lightweight and strength are of importance, such as an aircraft application.

The carbon fiber may be a general-purpose fiber or a high-strength fiber. The carbon fiber may also be a long fiber, a short fiber, a chopped fiber, or a recycled fiber.

As a sizing agent for the carbon fiber, for example, any of urethane-based emulsion, epoxy-based emulsion, nylon-based emulsion, and olefin-based emulsion can be used.

An average length of carbon fibers, i.e., an average fiber length, is preferably 0.1 mm or more, more preferably 0.3 mm or more, still more preferably 0.5 mm or more, and is preferably 15.0 mm or less and more preferably 13.0 mm or less. When the average fiber length is 0.1 mm or more, an reinforcing effect of a carbon fiber on its mechanical properties tends to be fully exhibited. When the average fiber length is 15.0 mm or less, carbon fibers are likely to have favorable dispersibility in the ethylene polymer composition (A). The molded product obtained by molding the resin composition (X) containing the ethylene polymer composition (A) and carbon fibers thus tends to have its favorable appearance.

The average diameter of the carbon fibers is preferably 3 µm or more, more preferably 5 µm or more, and preferably 30 µm or less, more preferably 21 µm or less, and still more preferably 19 µm or less. The carbon fiber having an average diameter of 3 µm or more is less likely to break upon molding, and a molded body to be obtained tends to have high impact strength. The carbon fiber having an average diameter of 30 µm or less allows a molded body to have a favorable appearance and does not reduce an aspect ratio of the carbon fiber as well, resulting in a tendency of a molded body obtained from the resin composition (X) to have a sufficient reinforcing effect on mechanical properties such as rigidity and heat resistance.

The carbon filler (B) may be used singly or in combination of two or more thereof.

### <Other component>

The resin composition (X) may contain other thermoplastic resins such as other polyolefinic resins, and resin additives (for example, stabilizers such as a heat stabilizer and a weather stabilizer, a cross-linking agent, a cross-linking auxiliary agent, an antistatic agent, a slip agent, an anti-blocking agent, an anti-fogging agent, a lubricant, a dye, a pigment, a filler, a mineral oil-based softener, a petroleum resin, and, for example, wax other than the ethylene polymer (a2)) within the scope of the present invention not to impair the purpose thereof.

The total amount of the aforementioned other components when contained in the resin composition (X) is usually 5% by mass or less, preferably 2% by mass or less, and more preferably 1% by mass or less. In other words, the proportion of the total mass of the ultrahigh molecular weight ethylene polymer (a1), ethylene polymer (a2), and carbon filler (B) in the resin composition (X) occupied in the mass of the resin composition (X) is usually 95% by mass or more, preferably 98% by mass or more, and more preferably 99% by mass or more.

### <Ethylene resin composition (X)>

The resin composition (X) satisfies the requirements (X-a) and (X-b). Preferably, the resin composition (X) satisfies the requirements (X-a) and (X-b) and one or more of the requirements (X-c) to (X-f).

### [Requirement (X-a)]

The resin composition (X) contains 100 parts by mass of the ethylene polymer composition (A) and 1 to 30 parts by mass of the carbon filler (B). The amount of the carbon filler (B) compounded relative to 100 parts by mass of the ethylene polymer composition (A) is preferably 5 to 25 parts by mass and more preferably 5 to 15 parts by mass.

Since the resin composition (X) contains the carbon filler (B) in the above range, it has high electrical conductivity, and a molded body to be obtained from the resin composition (X) will also have high electrical conductivity. Since the resin composition (X) contains the ethylene polymer composition (A) in the above range, it has high sliding properties, abrasion resistance, rigidity, and chemical resistance, and a molded body to be obtained from the resin composition (X) will also have sliding properties, abrasion resistance, rigidity, and chemical resistance.

### [Requirement (X-b)]

The ratio of the shear viscosity η₁₃₃₀ of the resin composition (X), measured at a temperature of 250°C and a shear rate of 1330 s⁻¹ to the shear viscosity η_{13.3} thereof, measured at a temperature of 250°C and a shear rate of 13.3 s⁻¹ (η₁₃₃₀/η_{13.3}) is less than 0.027. The above ratio (η₁₃₃₀/η_{13.3}) is preferably 0.005 to 0.0265, more preferably 0.005 to 0.026, and still more preferably 0.010 to 0.0255.

Within the above range of the ratio (η_{1330/}η_{13.3}), the resin composition (X) facilitates achieving both its abrasion resistance and injection moldability.

### [Requirement (X-c)]

The shear viscosity η₁₃₃₀ of the resin composition (X) measured at a temperature of 250°C and a shear rate of 1330 s⁻¹ is preferably 100 to 300 Pa·s, more preferably 120 to 280 Pa·s, and still more preferably 150 to 250 Pa·s. Since a shear rate applied to a molten resin upon injection molding may be relatively close to 1,330s⁻¹, the shear viscosity η₁₃₃₀ can be said to be an index of injection moldability of the resin composition (X) in a temperature range in the vicinity of 250°C. In other words, when the shear viscosity η₁₃₃₀ of the resin composition (X) is within the above range, the resin composition (X) is likely to be easily injection molded in a temperature range in the vicinity of 250°C.

### [Requirement (X-d)]

The shear viscosity η_{13.3} of the resin composition (X), measured at a temperature of 250°C and a shear rate of 13.3 s⁻¹ is preferably 5,000 to 20,000 Pa·s, more preferably 5,500 to 18,000 Pa·s, and still more preferably 6,000 to 17,000 Pa·s. When the MFR of the resin composition (X) according to one embodiment of the present invention is measured, the shear rate applied to a molten resin tends to be relatively close to 13.3 s⁻¹. For this reason, the shear viscosity η_{13.3} can be taken as an index of the MFR of the resin composition (X). In other words, the higher the shear viscosity η_{13.3} is, the smaller the MFR of the resin composition (X) likely to be. Therefore, within the above range of the shear viscosity η_{13.3}, the resin composition (X) is likely to have such a small MFR that it is excellent in abrasion resistance.

### [Requirement (X-e)]

The resin composition (X) has an MFR, measured in accordance with JIS K 7210-1:2014 at 190°C under a load of 10 kg, of preferably 0.1 g/10 min or less, more preferably less than 0.1 g/10 min, still more preferably 0.001 g/10 min or more and less than 0.1 g/10 min, and particularly preferably in the range of 0.005 to 0.09 g/10 min.

Within the above range of the MFR of the resin composition (X), the resin composition (X) tends to have favorable abrasion resistance.

### [Requirement (X-f)]

The density of the resin composition (X) is preferably 990 to 1,020 kg/m³ and more preferably 995 to 1,015 kg/m³. The density of the resin composition (X) of 990 kg/m³ or more enables providing a molded body with excellent abrasion resistance. Also, the density of the resin composition (X) of 1,020 kg/m³ or less enables a molded body excellent in its lightweight to be provided. Incidentally, a method for measuring the density of the resin composition (X) is as described in the Examples.

### <<Production method of ethylene resin composition (X)>>

The resin composition (X) can be obtained by a conventionally known production method, for example, by dry blending the ethylene polymer composition (A), the carbon filler (B), and the other component, if necessary. After dry blending, the mixture may be melt kneaded in a single-screw or twin-screw extruder, extruded into a strand shape, and granulated into pellets to obtain pellets of the resin composition (X). Incidentally, the carbon filler (B) and the other component may be preliminarily mixed with the polymer component such as the ethylene polymer composition (A) and added to the ethylene polymer composition (A) in the form of a master batch.

### <<Molded body>>

The molded body according to one embodiment of the present invention includes the resin composition (X). Specific examples of a method for producing the molded body (i.e., a method for molding the resin composition (X)) include conventionally known molding methods of polyolefins, such as extrusion molding, injection molding, film molding, inflation molding, blow molding, extrusion blow molding, injection blow molding, press molding, vacuum molding, powder slush molding, calendar molding, and foam molding. Preferably, the resin composition (X) is molded by injection molding to obtain a molded body including the resin composition (X). As the molded body, a molded body containing the resin composition (X) containing carbon nanotubes as the carbon filler (B) is preferable.

The molded body may be a molded body formed of the resin composition (X), or may be a molded body with a portion, such as a surface layer, formed of the resin composition (X).

In general, an injection molded body tends to have lower electrical conductivity (higher volume resistivity) than a press molded body, but a molded body obtained by injection molding the resin composition (X) tends to exhibit high electrical conductivity. In other words, the resin composition (X) can form a molded body with excellent electrical conductivity regardless of molding methods.

For example, when a conductivity test (test temperature 23°C, humidity 50%, application time 10 seconds, and application current 0.1 to 1.0 mA) is performed on an injection molded body obtained by having injection molded the resin composition (X) under conditions of a processing temperature of 250°C and mold temperature of 50°C, the volume resistivity is preferably 1 X 10⁸ Ω·cm or less and more preferably 1 X 10⁶ Ω·cm or less. The smaller the volume resistivity, the more preferred it is, and the lower limit value thereof is usually 1 X 10¹ Ω·cm.

Furthermore, a molded body consisting of the resin composition (X) also have excellent mechanical properties.

When a abrasion test (test temperature 23°C, mating material S45C, rate 50 cm/sec, sliding distance 3 km, and load 15 kg) is performed on a molded body to be obtained from the resin composition (X), the abrasion loss (unit: 10⁻³ mm³/(kgf·km)) is preferably 200 or less, more preferably 160 or less, still more preferably 150 or less, and particularly preferably 140 or less. The smaller the abrasion loss, the more preferred it is, and the lower limit value thereof is usually 20 X 10⁻³ mm³/(kgf·km) or more. When the abrasion loss in the abrasion test under the above conditions falls in the aforementioned range, the abrasion resistance is sufficient in usage environment of a molded body to be obtained from the resin composition (X), which is preferred.

### <<Use of molded body>>

Specific examples of the molded body include a wide range of applications, from household items such as daily necessities and recreational applications to general industrial applications and industrial products. Examples thereof include home appliance material parts, telecommunication parts, electrical components, electronic components, automobile parts, other vehicle parts, ships, aircraft materials, machine mechanism parts, building-related members, civil engineering materials, agricultural materials, power tool parts, food containers, films, sheets, and fibers.

Also, the molded body according to one embodiment of the present invention can be widely used for conventionally known polyethylene applications, and it has a particularly excellent balance of properties such as abrasion resistance, self-lubrication, impact strength, and thin-wall molding, and therefore, as applications requiring these properties, it can be used for, for example, covering materials (lamination) for metals such as steel pipes, electric wires, and automobile sliding door rails, covering materials (lamination) for various rubber such as pressure-resistant rubber hoses, gaskets for automobile doors, gaskets for clean room doors, automobile glass run channels, and automobile weather strips, linings such as hoppers and chutes, sliding materials such as gears, bearings, rollers, tape reels, various guide rails and elevator rail guides, and various protective liner materials.

The molded body according to one embodiment of the present invention has excellent electrical conductivity, making it possible to inhibit various machine parts and sliding members from being electrostatically charged and to be suitably used in applications requiring antistatic properties.

### Examples

One embodiment of the present invention will be described in more detail below based on Examples, but the present invention is not limited to these Examples.

### <Measurement conditions, for example, for physical properties of polymer and polymer composition>

Measurement conditions, for example, for each physical property are as follows.

### [Intrinsic viscosity [η]]

The ethylene polymer composition (A) was dissolved in decalin, and the intrinsic viscosity measured at 135°C was [η]. Similarly, the intrinsic viscosity measured in decalin at 135°C for each of the ultrahigh molecular weight ethylene polymer (a1) and the ethylene polymer (a2) was also [η].

### [Measurement method of density]

The density of the ethylene polymer composition (A) before addition of the carbon filler was measured by a density gradient method in accordance with ASTM D1505. The density of the ethylene polymer (a2) was also measured by the similar method.

### <Catalyst Preparation Example 1: Preparation of solid titanium catalyst component>

A 10 L reactor equipped with a stirrer, which had been fully substituted with nitrogen, was added with 4.0 L of refined hexane and 95 g of anhydrous magnesium chloride, and 350 ml of ethanol was added dropwise at room temperature over a period of 2 hours under stirring, and then mixed at room temperature for approximately 1 hour. Next, 330 ml of diethylaluminum chloride was added dropwise over a period of 2 hours, and after the dropwise addition, it was mixed at room temperature for approximately 1 hour, followed by dropwise addition of 1.3 L of titanium tetrachloride over a period of 1 hour, to carry out a reaction at 80°C for 1 hour.

After completion of the reaction, a solid portion was separated using a filter, and this solid portion was washed twice with refined hexane to obtain a solid titanium catalyst component. The titanium content in the solid titanium catalyst component was 6.8 wt%, the magnesium content was 15 wt%, and the chlorine content was 60 wt%.

### <Example 1>

### [Production Example 1: Production of ethylene polymer composition (A-1)]

### (First-stage polymerization: Polymerization of ultrahigh molecular weight ethylene polymer (a1-1))

A 24 L autoclave fully substituted with nitrogen was added with 12 L of purified n-decane, the inside of which was then raised to a temperature of 50°C. The autoclave was added with 12 mmol of triethylaluminum and the solid titanium catalyst component (0.12 mmol in terms of titanium atoms) prepared by Catalyst Preparation Example 1 at 50°C. The catalyst inlet was then closed, and ethylene was introduced so that the internal pressure of the autoclave reached to 4.3 kg/cm²·G, to carry out the first-stage polymerization at 45 to 46°C. After introduction of ethylene for 45 minutes, the pressure was released, and the temperature was lowered to room temperature. The solid white polymer produced was partially separated and dried, and the intrinsic viscosity [η] thereof was measured to be 28.0 dl/g. Incidentally, this value is the intrinsic viscosity [η] (in decalin at 135°C) of the ultrahigh molecular weight ethylene polymer (a1-1) contained in the ethylene polymer (A-1).

### (Second-stage polymerization: Polymerization of ethylene polymer (a2-1))

The autoclave was then introduced with hydrogen at 5.0 kg/cm²·G and further introduced with ethylene at 3.0 kg/cm² to allow the total pressure to be 8.0 kg/cm²·G, while a polymerization temperature was raised to 80°C, to carry out the second-stage polymerization (i.e., a polymerization of the ethylene polymer (a2-1)) for 490 minutes. After the temperature was lowered to room temperature, the solid white polymer produced was separated and dried. The weight of the obtained ethylene polymer composition (A-1) was 3,460 g, and the intrinsic viscosity [η] (in decalin at 135°C) of the ethylene polymer composition (A-1) was 7.4 dl/g, and the density was 966 kg/m³.

### (Measurement of physical properties of ethylene polymer (a2-1))

Separately, a polymerization was carried out under the second-stage conditions, and the solid white polymer produced was then separated and dried. The weight of the obtained ethylene polymer (a2-1') was 2,162 g, the intrinsic viscosity [η] (in decalin at 135°C) was 1.1 dl/g, and the density was 970 kg/m³. Herein, the ethylene polymer (a2-1') corresponds to the polymer produced in the second-stage polymerization of the ethylene polymer composition (A-1), so that the intrinsic viscosity, density, and amount of the ethylene polymer (a2-1') produced are the same as those of the ethylene polymer (a2-1).

### (Content of ultrahigh molecular weight ethylene polymer (a1-1))

The difference between the amount of the obtained ethylene polymer composition (A-1) produced and the amount of ethylene polymer (a2-1') produced was defined as the amount of ultrahigh molecular weight ethylene polymer (a1-1) produced, and furthermore, from the mass ratio of the polymers, the content of ultrahigh molecular weight ethylene polymer (a1-1) in the ethylene polymer composition (A-1) was calculated to be 38% by mass.

### [Fabrication of master batch (C1) containing carbon filler (B-1)]

Carbon nanotubes (product name: Carbon Nanotube NC7000, average diameter: 9.5 nm, and average length: 1.5 µm, manufactured by Nanocyl SA) were used as the carbon filler (B-1).

Fifteen percentage by mass of the carbon filler (B-1) and 85% by mass of the ethylene polymer composition (A-1) obtained in Production Example 1 were kneaded in a twin-screw extruder to fabricate the master batch (C1). The kneading was performed under the conditions of a temperature of 250°C, extruder aperture of 30 mm, and L/D = 30.

### [Preparation Example 1: Production of ethylene resin composition (X-1)]

Forty percentage by mass of the ethylene polymer composition (A-1) obtained in Preparation Example 1 and 60% by mass of the master batch (C1) were mixed and kneaded in a twin-screw extruder to fabricate an ethylene resin composition (X-1). The kneading was performed under the conditions of a temperature of 250°C, extruder aperture of 30 mm, and L/D = 30. After the kneading process, the ethylene resin composition (X-1) was extruded into a strand shape and granulated into pellets. Furthermore, the obtained pellet was measured for various physical properties.

### [Measurement of MFR (Melt flow rate)]

The MFR of the ethylene resin composition (X-1) was measured at a measurement temperature of 190°C and a load of 10 kg in accordance with JIS K7210-1:2014. The obtained results are shown in Table 1-1. In the following description, Table 1-1 and Table 1-2 are collectively referred to as Table 1.

### [Measurement of density of ethylene resin composition (X-1)]

The density of the ethylene resin composition (X-1) was measured by the density gradient method in accordance with ASTM D1505, as with the ethylene resin composition (A). The results are shown in Table 1.

### [Measurement of shear viscosity]

The shear viscosity of the ethylene resin composition (X-1) was measured using a capillary rheometer: Capilograph 1D, manufactured by Toyo Seiki Seisaku-sho Ltd. The shear viscosity was measured under the conditions of a resin temperature of 250°C, preheating time of 6 minutes, and barrel diameter of Φ10 mm, at shear rates of 13.3 sec⁻¹ and 1330 sec⁻¹. The results are shown in Table 1.

### [Fabrication of injection molded body]

Pellets of the ethylene resin composition (X-1) were injection molded using an all electric injection molding machine EC75SX-III manufactured by SHIBAURA MACHINE CO., LTD. under the conditions of a processing temperature: 250°C and mold temperature: 50°C to obtain a square plate of 120 X 130 X 3 mm.

### [Measurement of volume resistivity]

The injection molded body (120 X 130 X 3 mm) of the ethylene resin composition (X-1) was measured in accordance with JIS K7194;1994 using a Loresta-GX-MCP-T700 low resistivity meter, manufactured by NittoSeiko Analytech Co., Ltd. under the conditions of an application time of 10 seconds, temperature of 23°C, humidity of 50%, and application current of 0.1 to 1.0 mA. The results are shown in Table 1.

### [Measurement of abrasion loss]

The injection molded body (120 X 130 X 3 mm) of the ethylene resin composition (X-1) was punched out to 30 X 30 X 3 mm using a Schopper-type specimen punching machine manufactured by Ueshima Seisakusho Co., Ltd. The punched piece of 30 X 30 X 3 mm was measured in accordance with JIS K7218 using a friction and abrasion tester EFM-3 manufactured by A&D Company, Limited. The conditions were as follows: a mating material S45C, rate 50 cm/sec, distance 3 km, load 15 kg, and temperature 23°C. The results are shown in Table 1.

### <Example 2>

### [Production Example 2: Production of ethylene polymer composition (A-2)]

A first-stage polymerization, second-stage polymerization, and measurements were carried out under the same conditions as in Production Example 1, except that the internal pressure of an autoclave in a first stage was 4.6 kg/cm²·G, and the solid white polymer produced was then separated and dried. The weight of the resulting ethylene polymer composition (A-2) was 3,550 g, and the intrinsic viscosity [η] (in decalin at 135°C) of the ethylene polymer composition (A-2) was 8.3 dl/g, and the density was 966 kg/m³. Also, the intrinsic viscosity [η] of the solid white polymer produced in the first stage (i.e., the intrinsic viscosity of an ultrahigh molecular weight ethylene polymer (a1-2) in decalin at 135°C) was 28.0 dl/g.

Separately, a polymerization was carried out under the second-stage conditions, and the solid white polymer produced was then separated and dried. The weight of the obtained ethylene polymer (a2-2') was 2,156 g, the intrinsic viscosity [η] (in decalin at 135°C) was 1.1 dl/g, and the density was 970 kg/m³. It is to be noted that the intrinsic viscosity, density, and amount of the ethylene polymer (a2-2') produced are the same as those of an ethylene polymer (a2-2) contained in the ethylene polymer composition (A-2).

From the mass ratio of the polymers, the content of the ultrahigh molecular weight ethylene polymer (a1-2) in the ethylene polymer composition (A-2) was calculated to be 39% by mass.

### [Fabrication of master batch (C2) containing carbon filler (B-1)]

The master batch (C2) was fabricated in the same manner as in the fabrication of master batch (C1), except that the ethylene polymer composition (A-2) was used instead of an ethylene polymer composition (A-1).

### [Preparation Example 2: Production of ethylene resin composition (X-2)]

The composition was produced in the same manner as in Example 1, except that 40% by mass of the ethylene polymer composition (A-2) and 60% by mass of the master batch (C2) were used, and then an injection molded body was produced and various physical properties were measured. The results are shown in Table 1.

### <Example 3>

### [Production Example 3: Production of ethylene polymer composition (A-3)]

A first-stage polymerization, second-stage polymerization, and measurements were carried out under the same conditions as in Production Example 1, except that the internal pressure of an autoclave in a first stage was 4.1 kg/cm²·G, and the solid white polymer produced was then separated and dried. The weight of the resulting ethylene polymer composition (A-3) was 3,650 g, and the intrinsic viscosity [η] (in decalin at 135°C) of the ethylene polymer composition (A-3) was 6.9 dl/g, and the density was 966 kg/m³. Also, the intrinsic viscosity [η] of the solid white polymer produced in the first stage (i.e., the intrinsic viscosity of an ultrahigh molecular weight ethylene polymer (a1-3) in decalin at 135°C) was 28.0 dl/g.

Separately, a polymerization was carried out under the second-stage conditions, and the solid white polymer produced was then separated and dried. The weight of the obtained ethylene polymer (a2-3') was 2,313 g, the intrinsic viscosity [η] (in decalin at 135°C) was 1.1 dl/g, and the density was 970 kg/m³. It is to be noted that the intrinsic viscosity, density, and amount of the ethylene polymer (a2-3') produced are the same as those of an ethylene polymer (a2-3) contained in the ethylene polymer composition (A-3).

From the mass ratio of the polymers, the content of the ultrahigh molecular weight ethylene polymer (a1-3) in the ethylene polymer composition (A-3) was calculated to be 37% by mass.

### [Fabrication of master batch (C3) containing carbon filler (B-1)]

The master batch (C3) was fabricated in the same manner as in the fabrication of master batch (C1), except that the ethylene polymer composition (A-3) was used instead of an ethylene polymer composition (A-1).

### [Preparation Example 3: Production of ethylene resin composition (X-3)]

The composition was produced in the same manner as in Example 1, except that 40% by mass of the ethylene polymer composition (A-3) and 60% by mass of the master batch (C3) were used, and an injection molded body was then produced and various physical properties were measured. The results are shown in Table 1.

### <Example 4>

### [Production Example 4: Production of ethylene polymer composition (A-4)]

A first-stage polymerization, second-stage polymerization, and measurements were carried out under the same conditions as in Production Example 1, except that the internal pressure of an autoclave in a first stage was 3.6 kg/cm²·G, and the solid white polymer produced was then separated and dried. The weight of the resulting ethylene polymer composition (A-4) was 3,170 g, and the intrinsic viscosity [η] (in decalin at 135°C) of the ethylene polymer composition (A-4) was 5.2 dl/g, and the density was 967 kg/m³. Also, the intrinsic viscosity [η] of the solid white polymer produced in the first stage (i.e., the intrinsic viscosity of an ultrahigh molecular weight ethylene polymer (a1-4) in decalin at 135°C) was 28.0 dl/g.

Separately, a polymerization was carried out under the second-stage conditions, and the solid white polymer produced was then separated and dried. The weight of the obtained ethylene polymer (a2-4') was 2,148 g, the intrinsic viscosity [η] (in decalin at 135°C) was 1.1 dl/g, and the density was 970 kg/m³. It is to be noted that the intrinsic viscosity, density, and amount of the ethylene polymer (a2-4') produced are the same as those of an ethylene polymer (a2-4) contained in the ethylene polymer composition (A-4).

From the mass ratio of the polymers, the content of the ultrahigh molecular weight ethylene polymer (a1-4) in the ethylene polymer composition (A-4) was calculated to be 32% by mass.

### [Fabrication of master batch (C4) containing carbon filler (B-1)]

The master batch (C4) was fabricated in the same manner as in the fabrication of master batch (C1), except that the ethylene polymer composition (A-4) was used instead of an ethylene polymer composition (A-1).

### [Preparation Example 4: Production of ethylene resin composition (X-4)>

The composition was produced in the same manner as in Example 1, except that 40% by mass of the ethylene polymer composition (A-4) and 60% by mass of the master batch (C4) were used, and an injection molded body was then produced and various physical properties were measured. The results are shown in Table 1.

### <Example 5>

### [Production Example 5: Production of ethylene polymer composition (A-5)]

A first-stage polymerization, second-stage polymerization, and measurements were carried out under the same conditions as in Production Example 1, except that the internal pressure of an autoclave in a first stage was 5.0 kg/cm²·G, and the solid white polymer produced was then separated and dried. The weight of the resulting ethylene polymer composition (A-5) was 3,660 g, and the intrinsic viscosity [η] (in decalin at 135°C) of the ethylene polymer composition (A-5) was 9.3 dl/g, and the density was 965 kg/m³. Also, the intrinsic viscosity [η] of the solid white polymer produced in the first stage (i.e., the intrinsic viscosity of an ultrahigh molecular weight ethylene polymer (a1-5) in decalin at 135°C) was 28.0 dl/g.

Separately, a polymerization was carried out under the second-stage conditions, and the solid white polymer produced was then separated and dried. The weight of the obtained ethylene polymer (a2-5') was 2,158 g, the intrinsic viscosity [η] (in decalin at 135°C) was 1.1 dl/g, and the density was 970 kg/m³. It is to be noted that the intrinsic viscosity, density, and amount of the ethylene polymer (a2-5') produced are the same as those of an ethylene polymer (a2-5) contained in the ethylene polymer composition (A-5).

From the mass ratio of the polymers, the content of the ultrahigh molecular weight ethylene polymer (a1-5) in the ethylene polymer composition (A-5) was calculated to be 41% by mass.

### [Fabrication of master batch (C5) containing carbon filler (B-1)]

The master batch (C5) was fabricated in the same manner as in the fabrication of master batch (C1), except that the ethylene polymer composition (A-5) was used instead of an ethylene polymer composition (A-1).

### [Preparation Example 5: Production of ethylene resin composition (X-5)]

The composition was produced in the same manner as in Example 1, except that 40% by mass of the ethylene polymer composition (A-5) and 60% by mass of the master batch (C5) were used, and an injection molded body was then produced and various physical properties were measured. The results are shown in Table 1.

### <Comparative Example 1>

### [Production Example 6: Production of ethylene polymer composition (A-6)]

A first-stage polymerization, second-stage polymerization, and measurements were carried out under the same conditions as in Production Example 1, except that the internal pressure of an autoclave in a first stage was 3.2 kg/cm²·G, and the solid white polymer produced was then separated and dried. The weight of the resulting ethylene polymer composition (A-6) was 3,380 g, and the intrinsic viscosity [η] (in decalin at 135°C) of the ethylene polymer composition (A-6) was 4.3 dl/g, and the density was 969 kg/m³. Also, the intrinsic viscosity [η] of the solid white polymer produced in the first stage (i.e., the intrinsic viscosity of an ultrahigh molecular weight ethylene polymer (a1-6) in decalin at 135°C) was 28.0 dl/g.

Separately, a polymerization was carried out under the second-stage conditions, and the solid white polymer produced was then separated and dried. The weight of the obtained ethylene polymer (a2-6') was 2,468 g, the intrinsic viscosity [η] (in decalin at 135°C) was 1.1 dl/g, and the density was 970 kg/m³. It is to be noted that the intrinsic viscosity, density, and amount of the ethylene polymer (a2-6') produced are the same as those of an ethylene polymer (a2-6) contained in the ethylene polymer composition (A-6).

From the mass ratio of the polymers, the content of the ultrahigh molecular weight ethylene polymer (a1-6) in the ethylene polymer composition (A-6) was calculated to be 27% by mass.

### [Fabrication of master batch (C6) containing carbon filler (B-1)]

The master batch (C6) was fabricated in the same manner as in the fabrication of master batch (C1), except that the ethylene polymer composition (A-6) was used instead of an ethylene polymer composition (A-1).

### [Preparation Example 6: Production of ethylene resin composition (CX-6)]

The composition was produced in the same manner as in Example 1, except that 40% by mass of the ethylene polymer composition (A-6) and 60% by mass of the master batch (C6) were used, and an injection molded body was then produced and various physical properties were measured. The results are shown in Table 1.

### <Comparative Example 2>

### [Production Example 7: Production of ethylene polymer composition (A-7)]

A first-stage polymerization, second-stage polymerization, and measurements were carried out under the same conditions as in Production Example 1, except that the internal pressure of an autoclave in a first stage was 2.9 kg/cm²·G, and the solid white polymer produced was then separated and dried. The weight of the resulting ethylene polymer composition (A-7) was 3,220 g, and the intrinsic viscosity [η] (in decalin at 135°C) of the ethylene polymer composition (A-7) was 3.5 dl/g, and the density was 969 kg/m³. Also, the intrinsic viscosity [n] of the solid white polymer produced in the first stage (i.e., the intrinsic viscosity of an ultrahigh molecular weight ethylene polymer (a1-7) in decalin at 135°C) was 28.0 dl/g.

Separately, a polymerization was carried out under the second-stage conditions, and the solid white polymer produced was then separated and dried. The weight of the obtained ethylene polymer (a2-7') was 2,394 g, the intrinsic viscosity [η] (in decalin at 135°C) was 1.1 dl/g, and the density was 970 kg/m³. It is to be noted that the intrinsic viscosity, density, and amount of the ethylene polymer (a2-7') produced are the same as those of an ethylene polymer (a2-7) contained in the ethylene polymer composition (A-7).

From the mass ratio of the polymers, the content of the ultrahigh molecular weight ethylene polymer (a1-7) in the ethylene polymer composition (A-7) was calculated to be 26% by mass.

### [Fabrication of master batch (C7) containing carbon filler (B-1)]

The master batch (C7) was fabricated in the same manner as in the fabrication of master batch (C1), except that the ethylene polymer composition (A-7) was used instead of an ethylene polymer composition (A-1).

### [Preparation Example 7: Production of ethylene resin composition (CX-7)]

The composition was produced in the same manner as in Example 1, except that 40% by mass of the ethylene polymer composition (A-7) and 60% by mass of the master batch (C7) were used, and an injection molded body was then produced and various physical properties were measured. The results are shown in Table 1.

### <Comparative Example 3>

### [Production Example 8: Production of ethylene polymer composition (A-8)]

A first-stage polymerization, second-stage polymerization, and measurements were carried out under the same conditions as in Production Example 1, except that the internal pressure of an autoclave in a first stage was 2.5 kg/cm²·G, and the solid white polymer produced was then separated and dried. The weight of the resulting ethylene polymer composition (A-8) was 3,300 g, and the intrinsic viscosity [η] (in decalin at 135°C) of the ethylene polymer composition (A-8) was 2.4 dl/g, and the density was 969 kg/m³. Also, the intrinsic viscosity [n] of the solid white polymer produced in the first stage (i.e., the intrinsic viscosity of an ultrahigh molecular weight ethylene polymer (a1-8) in decalin at 135°C) was 28.0 dl/g.

Separately, a polymerization was carried out under the second-stage conditions, and the solid white polymer produced was then separated and dried. The weight of the obtained ethylene polymer (a2-8') was 2,526 g, the intrinsic viscosity [η] (in decalin at 135°C) was 1.1 dl/g, and the density was 970 kg/m³. It is to be noted that the intrinsic viscosity, density, and amount of the ethylene polymer (a2-8') produced are the same as those of an ethylene polymer (a2-8) contained in the ethylene polymer composition (A-8).

From the mass ratio of the polymers, the content of the ultrahigh molecular weight ethylene polymer (a1-8) in the ethylene polymer composition (A-8) was calculated to be 23% by mass.

### [Fabrication of master batch (C8) containing carbon filler (B-1)]

The master batch (C8) was fabricated in the same manner as in the fabrication of master batch (C1), except that the ethylene polymer composition (A-8) was used instead of an ethylene polymer composition (A-1).

### [Preparation Example 8: Production of ethylene resin composition (CX-8)]

The composition was produced in the same manner as in Example 1, except that 40% by mass of the ethylene polymer composition (A-8) and 60% by mass of the master batch (C8) were used, and an injection molded body was then produced and various physical properties were measured. The results are shown in Table 1.

### <Comparative Example 4>

### [Production Example 9: Production of ethylene polymer composition (A-9)]

A first-stage polymerization, second-stage polymerization, and measurements were carried out under the same conditions as in Production Example 1, except that the internal pressure of an autoclave in a first stage was 3.4 kg/cm²·G, and the solid white polymer produced was then separated and dried. The weight of the resulting ethylene polymer composition (A-9) was 3,160 g, and the intrinsic viscosity [η] (in decalin at 135°C) of the ethylene polymer composition (A-9) was 4.8 dl/g, and the density was 968 kg/m³. Also, the intrinsic viscosity [η] of the solid white polymer produced in the first stage (i.e., the intrinsic viscosity of an ultrahigh molecular weight ethylene polymer (a1-9) in decalin at 135°C) was 28.0 dl/g.

Separately, a polymerization was carried out under the second-stage conditions, and the solid white polymer produced was then separated and dried. The weight of the obtained ethylene polymer (a2-9') was 2,224 g, the intrinsic viscosity [η] (in decalin at 135°C) was 1.1 dl/g, and the density was 970 kg/m³. It is to be noted that the intrinsic viscosity, density, and amount of the ethylene polymer (a2-9') produced are the same as those of an ethylene polymer (a2-9) contained in the ethylene polymer composition (A-9).

From the mass ratio of the polymers, the content of the ultrahigh molecular weight ethylene polymer (a1-9) in the ethylene polymer composition (A-9) was calculated to be 30% by mass.

### [Fabrication of master batch (C9) containing carbon filler (B-1)]

The master batch (C9) was fabricated in the same manner as in the fabrication of master batch (C1), except that the ethylene polymer composition (A-9) was used instead of the ethylene polymer composition (A-1), and the kneading temperature was 270°C.

### [Preparation Example 9: Production of ethylene resin composition (CX-9)]

The composition was produced in the same manner as in Example 1, except that 40% by mass of the ethylene polymer composition (A-2) and 60% by mass of the master batch (C9) were used, and an injection molded body was then produced and various physical properties were measured. The results are shown in Table 1.

### <Comparative Example 5>

### [Production Example 10: Production of ethylene polymer composition (A-10)]

A first-stage polymerization, second-stage polymerization, and measurements were carried out under the same conditions as in Production Example 1, except that the internal pressure of an autoclave in a first stage was 3.3 kg/cm²·G, and the solid white polymer produced was then separated and dried. The weight of the resulting ethylene polymer composition (A-10) was 3,400 g, and the intrinsic viscosity [η] (in decalin at 135°C) of the ethylene polymer composition (A-10) was 4.7 dl/g, and the density was 968 kg/m³. Also, the intrinsic viscosity [η] of the solid white polymer produced in the first stage (i.e., the intrinsic viscosity of an ultrahigh molecular weight ethylene polymer (a1-10) in decalin at 135°C) was 28.0 dl/g.

Separately, a polymerization was carried out under the second-stage conditions, and the solid white polymer produced was then separated and dried. The weight of the obtained ethylene polymer (a2-10') was 2,438 g, the intrinsic viscosity [η] (in decalin at 135°C) was 1.1 dl/g, and the density was 970 kg/m³. It is to be noted that the intrinsic viscosity, density, and amount of the ethylene polymer (a2-10') produced are the same as those of an ethylene polymer (a2-10) contained in the ethylene polymer composition (A-10).

From the mass ratio of the polymers, the content of the ultrahigh molecular weight ethylene polymer (a1-10) in the ethylene polymer composition (A-10) was calculated to be 28% by mass.

### [Fabrication of master batch (C10) containing carbon filler (B-1)]

The master batch (C10) was fabricated in the same manner as in the fabrication of master batch (C1), except that the ethylene polymer composition (A-10) was used instead of an ethylene polymer composition (A-1).

### [Preparation Example 10: Production of ethylene resin composition (CX-10)]

The composition was produced in the same manner as in Example 1, except that 40% by mass of the ethylene polymer composition (A-10) and 60% by mass of the master batch (C10) were used, and an injection molded body was then produced and various physical properties were measured. The results are shown in Table 1.

### <Comparative Example 6>

### [Production Example 11: Production of ethylene polymer composition (A-11)]

An ultrahigh molecular weight ethylene polymer (a1-11) having an intrinsic viscosity [η] of 30 dl/g (in decalin at 135°C) and an ethylene polymer (a2-11-1) having an intrinsic viscosity [η] (in decalin at 135°C) of 1.5 dl/g were produced in a mass ratio of 41/59 by the two-stage polymerization to obtain an ethylene polymer composition (A-11') having an intrinsic viscosity [η] of 4.4 dl/g (in decalin at 135°C). Next, using a PCM twin-screw extruder manufactured by Ikegai Iron Works, Ltd., the ethylene polymer composition (A-11') and an ethylene polymer (product name Hi-Zex 1700JP, manufactured by Prime Polymer Co., Ltd.) (a2-11-2) having an intrinsic viscosity [η] of 1.1 dl/g (in decalin at 135°C) and a density of 965 kg/m³ were mixed by melt blending in the ratio of 49/51 to obtain pellets of the ethylene polymer composition (A-11).

### [Preparation of master batch (C11) containing carbon filler (B-1)]

The master batch (C11) was fabricated in the same manner as in the fabrication of master batch (C1), except that 75% by mass of the ethylene polymer composition (A-11) was used instead of an ethylene polymer composition (A-1), and 10% by mass of wax (polyethylene wax, corresponding to an ethylene polymer (a2)) was additionally used.

### [Preparation Example 11: Production of ethylene resin composition (CX-11)]

The composition was produced in the same manner as in Example 1, except that 40% by mass of the ethylene polymer composition (A-11) and 60% by mass of the master batch (C11) were used, and an injection molded body was then produced and various physical properties were measured. The results are shown in Table 1.

**[Table 1-1]**

| | | | Example 1 | Example 2 | Example 3 | Example 4 | Example 5 |
|---|---|---|---|---|---|---|---|
| | Ethylene polymer composition (A) | | A-1 | A-2 | A-3 | A-4 | A-5 |
| Compounding ratio | Ultrahigh molecular weight ethylene polymer (a1) | Parts by mass | 38 | 39 | 37 | 32 | 41 |
| | Ethylene polymer (a2) | Parts by mass | 62 | 61 | 63 | 68 | 59 |
| | Carbon filler (B) | Parts by mass | 10 | 10 | 10 | 10 | 10 |
| Physical properties | [n] of ethylene polymer composition (A) | dl/g | 7.4 | 8.3 | 6.9 | 5.2 | 9.3 |
| | Density of ethylene polymer composition (A) | kg/m³ | 966 | 966 | 966 | 967 | 965 |
| | Density of ethylene resin composition (X) | kg/m³ | 1004 | 1004 | 1004 | 1004 | 1003 |
| | Shear viscosity η_{13.3} | Pa·s | 8816 | 12641 | 6934 | 9040 | 16070 |
| | Shear viscosity η₁₃₃₀ | Pa·s | 176 | 181 | 173 | 200 | 185 |
| | Ratio of shear viscosity (η₁₃₃₀/η_{13.3}) | - | 0.020 | 0.014 | 0.025 | 0.022 | 0.012 |
| | MFR (at 190°C under a load of 10 kg) | g/10 min | 0.06 | 0.03 | 0.08 | 0.10 | 0.01 |
| Abrasion resistance | Abrasion loss | 10⁻³mm³ /kgf·km | 70 | 60 | 120 | 130 | 40 |
| Electrical conductivity | Volume resistivity | Ω·cm | 1×106 | 1×106 | 1×106 | 1×106 | 1×106 |

**[Table 1-2]**

| | | | Comparative Example 1 | Comparative Example 2 | Comparative Example 3 | Comparative Example 4 | Comparative Example 5 | Comparative Example 6 |
|---|---|---|---|---|---|---|---|---|
| | Ethylene polymer composition (A) | | A-6 | A-7 | A-8 | A-9 | A-10 | A-11 |
| Compounding ratio | Ultrahigh molecular weight ethylene polymer (a1) | Parts by mass | 27 | 26 | 23 | 30 | 28 | 19 |
| | Ethylene polymer (a2) | Parts by mass | 73 | 74 | 77 | 70 | 72 | 81 |
| | Carbon filler (B) | Parts by mass | 10 | 10 | 10 | 10 | 10 | 10 |
| Physical properties | [η] of ethylene polymer composition (A) | dl/g | 4.3 | 3.5 | 2.4 | 4.8 | 4.7 | 2.7 |
| | Density of ethylene polymer composition (A) | kg/m³ | 969 | 969 | 969 | 968 | 968 | 969 |
| | Density of ethylene resin composition (CX) | kg/m³ | 1007 | 1007 | 1007 | 1005 | 1006 | 1005 |
| | Shear viscosity η_{13.3} | Pa·s | 4711 | 3911 | 3876 | 8037 | 6860 | 4364 |
| | Shear viscosity η₁₃₃₀ | Pa·s | 178 | 160 | 157 | 220 | 214 | 164 |
| | Ratio of shear viscosity (η₁₃₃₀/η_{13.3}) | - | 0.038 | 0.041 | 0.041 | 0.027 | 0.031 | 0.038 |
| | MFR(at 190°C under a load of 10 kg) | g/10 min | 1.0 | 3.0 | 5.0 | 0.40 | 0.70 | 2.00 |
| Abrasion resistance | Abrasion loss | 10⁻³mm³ /kgf·km | 200 | 220 | 250 | 180 | 160 | 200 |
| Electrical conductivity | Volume resistivity | Ω·cm | 1×106 | 1×106 | 1×106 | 1×10⁶ | 1×106 | 1×106 |

## Claims

1. An ethylene resin composition (X), comprising 100 parts by mass of an ethylene polymer composition (A) and 1 to 30 parts by mass of a carbon filler (B),
wherein a ratio η_{1330/}η_{13.3} of a shear viscosity η₁₃₃₀ measured at a temperature of 250°C and a shear rate of 1330 s⁻¹ to a shear viscosity η_{13.3} measured at a temperature of 250°C and a shear rate of 13.3 s⁻¹, is less than 0.027.

2. The ethylene resin composition (X) according to claim 1, wherein the carbon filler (B) is a carbon nanotube.

3. The ethylene resin composition (X) according to claim 1,
wherein the ethylene polymer composition (A) has a content of an ultrahigh molecular weight ethylene polymer (a1) of 20 to 60 parts by mass, and a content of a low to high molecular weight ethylene polymer (a2) of 40 to 80 parts by mass, relative to 100 parts by mass of a total amount of the ultrahigh molecular weight ethylene polymer (a1) having an intrinsic viscosity [η] of 10 to 40 dl/g measured in decalin at 135°C and the low to high molecular weight ethylene polymer (a2) having an intrinsic viscosity [η] of 0.1 to 9 dl/g measured in decalin at 135°C.

4. The ethylene resin composition (X) according to claim 1, having a melt flow rate of 0.1 g/10 min or less at 190°C under a load of 10 kg.

5. The ethylene resin composition (X) according to claim 1, wherein the ethylene polymer composition (A) has an intrinsic viscosity [η] of 3.0 to 15 dl/g measured in decalin at 135°C and a density of 930 to 980 kg/m³.

6. A molded body, comprising the ethylene resin composition (X) according to any one of claims 1 to 5.

7. The molded body according to claim 6, being an injection molded body.

8. The molded body according to claim 6, being a covering material or a sliding material.
